(19) Europäisches Patentamt / European Patent Office / Office européen des brevets

(11) **EP 4 253 046 A1**

(12) **EUROPEAN PATENT APPLICATION**
published in accordance with Art. 153(4) EPC

(43) Date of publication:
**04.10.2023 Bulletin 2023/40**

(21) Application number: **21898432.6**

(22) Date of filing: **10.11.2021**

(51) International Patent Classification (IPC):
**B32B 27/08** (2006.01)   **B32B 27/32** (2006.01)

(52) Cooperative Patent Classification (CPC):
**B32B 27/08; B32B 27/32**

(86) International application number:
**PCT/KR2021/016291**

(87) International publication number:
**WO 2022/114606 (02.06.2022 Gazette 2022/22)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **30.11.2020 KR 20200163687**

(71) Applicant: **Lotte Chemical Corporation**
**Seoul 05551 (KR)**

(72) Inventors:
• **OH, Sun Hyung**
**Daejeon 34110 (KR)**

• **LEE, Hyun Sup**
**Daejeon 34110 (KR)**
• **KIM, Tae Woo**
**Daejeon 34110 (KR)**
• **LEE, Jeong Min**
**Daejeon 34110 (KR)**
• **MOON, Yu Na**
**Daejeon 34110 (KR)**
• **KIM, Jun Ki**
**Seoul 08523 (KR)**
• **SHIN, Jik Soo**
**Seoul 07278 (KR)**
• **SON, Byung Sam**
**Hwaseong-si, Gyeonggi-do 18297 (KR)**

(74) Representative: **Germain Maureau**
**12, rue Boileau**
**69006 Lyon (FR)**

(54) **FILM FOR SHRINKABLE LABEL HAVING EXCELLENT TRANSPARENCY AND STIFFNESS**

(57) Disclosed is a film for a shrinkable label with improved transparency and stiffness in the film for a shrinkable label using a non-adhesive polyolefin-based material. The present invention is a film for a shrinkable label, the film including a skin layer, a core layer, and a seal layer, wherein the skin layer and the seal layer include 70 parts by weight to 90 parts by weight of a cyclic olefin resin and 10 parts by weight to 30 parts by weight of a linear low-density polyethylene, and the core layer includes 5 parts by weight to 25 parts by weight of a cyclic olefin resin, 60 parts by weight to 85 parts by weight of a propylene copolymer, and 1 part by weight to 20 parts by weight of a modifier.

ADHESIVE PORTION (REAR SURFACE)

ADHESIVE PORTION (OUTER SURFACE)

Fig. 1

EP 4 253 046 A1

**Description**

TECHNICAL FIELD

The present invention relates to a film for a shrinkable label, and more specifically, to a film for a shrinkable label with excellent transparency and stiffness.

This application claims the benefit of Korean Patent Application No. 10-2020-0163687, filed on November 30, 2020, in the Korean Intellectual Property Office, the disclosure of which is incorporated herein in its entirety by reference.

BACKGROUND ART

A label generally having a printed layer formed on the outer surface thereof is attached to various plastic containers such as PET bottles. Types of such a label include an adhesive label and a non-adhesive label, which are distinguished according to whether or not an adhesive is used between a container and the label.

The adhesive label is commonly manufactured using a polypropylene material, and the non-adhesive label is manufactured mainly using polystyrene, polyester, polyvinyl chloride, and the like. Containers made of such as polyethylene terephthalate (PET) and polystyrene (PS) and having labels attached thereto are pulverized and pelletized after use, and then recycled into containers through a recycling process. At this time, the recycling process is classified by the difference in specific gravity when pelletized containers are put into water.

Meanwhile, the Ministry of Environment enforced the standards for recyclability ease rating for packaging materials (Ministry of Environment Notice No. 2019-255, enforced on December 30, 2019), and according to the standards, non-adhesive labels having a specific gravity of less than 1 are classified as having the best recyclability ease rating, and therefore, there is a demand for the development of non-adhesive labels having a specific gravity of less than 1.

In consideration of the physical properties of a non-adhesive label, it is possible to use a polyolefin material having a specific gravity of less than 1 in the case of typical PS, PET, polyvinyl chloride (PVC), and the like due to a large specific gravity thereof, but it is difficult to impart shrinkability and seaming properties to a film made of the polyolefin material, so that a cyclic olefin copolymer (COC) resin is added when molding a film. However, even when the cyclic olefin copolymer resin is added, it is not easy to implement excellent transparency, and particularly, stiffness or stiffness required in a shooting process for fixing a label to a container during a label attachment process are not sufficient, so that there is a problem in that product quality as well as productivity are significantly degraded.

Korean Patent No. 10-1606915 discloses a heat-shrinkable film for a label, the film including a surface layer, a middle layer, and an inner layer, wherein the specific gravity of the surface layer and the specific gravity of the inner layer are each greater than the specific gravity of the middle layer, and each layer includes a predetermined content of a cyclic olefin resin, an anti-blocking agent, and a slip agent, but the transparency is not satisfactory according to the use of an additive, and the stiffness is not sufficient, so that there is a problem in a label attachment process.

DISCLOSURE OF THE INVENTION

TECHNICAL PROBLEM

An aspect of the present invention provides a film for a shrinkable label with improved transparency and stiffness in the film for a shrinkable label using a non-adhesive polyolefin-based material.

TECHNICAL SOLUTION

According to an aspect of the present invention, there is provided a film for a shrinkable label, the film including a skin layer, a core layer, and a seal layer, wherein the skin layer and the seal layer include 70 parts by weight to 90 parts by weight of a cyclic olefin resin and 10 parts by weight to 30 parts by weight of a linear low-density polyethylene, and the core layer includes 5 parts by weight to 25 parts by weight of a cyclic olefin resin and 60 parts by weight to 85 parts by weight of a propylene copolymer.

In addition, the film for a shrinkable label is characterized in that the cyclic olefin resin has a glass transition temperature (Tg) of 60 °C to 75 °C, and the propylene copolymer is a terpolymer of propylene and two types of $\alpha$-olefins.

In addition, the film for a shrinkable label is characterized in that the linear low-density polyethylene has a density of 0.9 g/cm³ to 0.95 g/cm³ and a melting point (Tm) of 118 °C to 128 °C, and the propylene copolymer has a melting point (Tm) of 123 °C to 138 °C and a melt index (230 °C, 2.16 kg load) of 2 g/10 min to 10 g/10 min.

In addition, the film for a shrinkable label is characterized in that the core layer further includes a polyolefin elastomer having a density of 0.85 g/cm³ to 0.9 g/cm³ and a melt index (230 °C, 2.16 kg load) of 0.5 g/10 min to 5 g/10 min.

In addition, the film for a shrinkable label is characterized in that the core layer further includes, as a modifier, 1 part by weight to 20 parts by weight of a hydrocarbon resin having a softening point of 120 °C to 140 °C or a propylene homopolymer having a melting point (Tm) of 155 °C to 165 °C and a melt index (230 °C, 2.16 kg load) of 1 g/10 min to 10 g/10 min.

In addition, the film for a shrinkable label is characterized in that the film has a transverse direction (TD) shrinkage rate of 40% or greater, a haze (ASTM D1003, 50 um thick) of less than 8%, and a stiffness of 4.5 gf/50 $\mu$m, as measured according to the following methods.

[Method for measuring shrinkage rate]

A film stretched in a transverse direction (TD) is cut to a size of 50 mm × 50 mm and immersed in a hot water bath at 60 °C, 70 °C, 80 °C, 90 °C, and 100 °C for 10 seconds each, followed by measuring the dimension of the film to calculate a shrinkage rate in each of a longitudinal direction (MD) and the transverse direction (TD) according to Equation 1 below, which is represented as an average shrinkage rate.

$$[Equation\ 1]$$

$$Shrinkage\ rate\ (\%) = (Dimensions\ before\ shrinkage\ -\ Dimensions\ after\ shrinkage)\ /\ Dimensions\ before\ shrinkage\ x\ 100$$

[Method of measuring stiffness]

Using a loop stiffness tester (Toyoseiki Co., Ltd.), a stretched film is cut to a size of 25 mm × 150 mm and fixed to left and right clamps (film fixing device) by setting a gap between the left and right clamp to 50 mm, and then portions of the specimen protruding to the outside of both clamps are cut, and the film is bent such that there is no gap between the clamps so as to form a loop-shaped specimen, and an end portion of the specimen is pushed at a speed of 60 mm/min with a recorder (loading device) to measure a load (gf) applied at the time.

According to another aspect of the present invention, there is provided a method for manufacturing a film by melt-blending, followed by combining, each of the skin layer, the core layer, and the seal layer.

## ADVANTAGEOUS EFFECTS

According to the present invention, it is possible to provide a film for a shrinkable label, the film including a skin layer, a core layer and a seal layer in a specific composition, thereby further improving transparency through the improvement of compatibility according to the composition of each layer and the improvement of dispersibility according to melt-blending, even by using a polyolefin material and not using a typical additive, and significantly reducing troubles during a label attachment process by using a modifier such as a hydrocarbon resin in the core layer to improve stiffness.

## BRIEF DESCRIPTION OF THE DRAWINGS

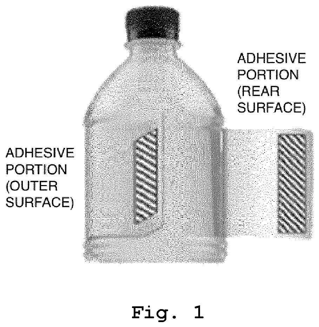

FIG. 1 is a view for explaining a site for confirming the presence or absence of adhesion of a film in a test example of the present invention.

## MODE FOR CARRYING OUT THE INVENTION

Hereinafter, the present invention will be described in detail with reference to preferred embodiments. Prior to this, it will be understood that words or terms used in the specification and claims shall not be interpreted as the meaning defined in commonly used dictionaries. It will be further understood that the words or terms should be interpreted as having a meaning that is consistent with their meaning in the context of the relevant art and the technical idea of the invention, based on the principle that an inventor may properly define the meaning of the words or terms to best explain the invention. Therefore, the configurations of the embodiments described herein are merely the most preferred embodiments of the present invention, and are not intended to limit the technical idea of the present invention. Therefore, it should be understood that there may be various equivalents and modifications that may substitute the embodiments at the time of filing the present application.

The present invention discloses a film for a shrinkable label, the film including a skin layer, a core layer, and a seal layer, wherein the skin layer and the seal layer include 70 parts by weight to 90 parts by weight of a cyclic olefin resin and 10 parts by weight to 30 parts by weight of a linear low-density polyethylene, and the core layer includes 5 parts by weight to 25 parts by weight of a cyclic olefin resin and 60 parts by weight to 85 parts by weight of a propylene copolymer.

In the present invention, the cyclic olefin resin used in each of the skin layer, the core layer, and the seal layer is basically a component used for imparting shrinkability and seaming properties to a polyolefin material, and may have a glass transition temperature (Tg) of 60 °C to 75 °C, preferably 65 °C to 70 °C. If the glass transition temperature is lower than 60 °C, the dimensional stability of a film for a shrinkable label may decrease due to low-temperature shrinkage when the atmospheric temperature rises in summer, and if higher than 70 °C, the heat shrinkability of the film may be degraded since a stretching temperature in a stretching direction is required to be increased during a stretching process in a manufacturing process of the film for a shrinkable label.

The cyclic olefin resin includes a cyclic olefin component as a copolymerization component, and is not particularly limited as long as it is a polyolefin including a cyclic olefin component in its main chain, and for example, the cyclic olefin resin may be a polymer of a cyclic olefin or a hydrogenated product thereof, a copolymer of a cyclic olefin and a $\alpha$-olefin or a hydrogenated product thereof, or the like. In addition, the cyclic olefin resin may be obtained by grafting and/or copolymerizing an unsaturated compound having a hydrophilic group with these polymers. The cyclic olefin resin may be used alone, or two or more thereof may be used in combination.

The linear low-density polyethylene used in the skin layer and the seal layer is mixed with the cyclic olefin resin in a specific content in a corresponding layer, and serves to lower the specific gravity of the film to the extent that physical properties improved due the use of the cyclic olefin resin are not degraded. In this regard, in the present invention, it is preferable that the linear low-density polyethylene has a density of is 0.9 $g/cm^3$ to 0.95 $g/cm^3$ and a melting point (Tm) of 118 °C to 128 °C, more preferably a density of 0.91 $g/cm^3$ to 0.93 $g/cm^3$ and a melting point (Tm) of 120 °C to 125 °C.

In terms of lowering the specific gravity of the film to the extent that the physical properties improved due to the use of the cyclic olefin resin are not degraded, and at the same time, improving the stiffness of the film by mixing the propylene copolymer used in the core layer with the cyclic olefin resin in a specific content in the core layer, it has been confirmed that it is most preferable that a propylene copolymer among olefin-based resins is mixed in a specific content. In this regard, in the present invention, the propylene copolymer is a terpolymer of propylene and two types of $\alpha$-olefins, and may have a melting point (Tm) of 123 °C to 138 °C and a melt index (230 °C, 2.16 kg load) of 2 g/10 min to 10 g/10 min, more preferably, a melting point (Tm) of 126 °C to 135 °C and a melt index (230 °C, 2.16 kg load) of 4 g/10 min to 8 g/10 min.

The terpolymer may be preferably an ethylene-propylene-$\alpha$-olefin terpolymer, wherein the $\alpha$-olefin has 4 to 10 carbon atoms, and may be, for example, 1-butene, 1-pentene, 1-hexene, 4-methyl-1-pentene, 1-heptene, 1-octene, 1-nonene, 1-decene, and the like, and in the case of the ethylene-propylene-$\alpha$-olefin terpolymer, the content of the ethylene and the $\alpha$-olefin may each be 0.5 wt% to 10 wt%.

In the present invention, the core layer may further include a modifier for improving the transparency as well as improving the stiffness of the film, and preferably, may include a hydrocarbon resin or a propylene homopolymer.

In consideration of the purpose of the modifier, the propylene homopolymer may have a melting point (Tm) of 155 °C to 165 °C and a melt index (230 °C, 2.16 kg load) of 1 g/10 min to 10 g/10 min, preferably a melting point (Tm) of 156 °C to 160 °C and a melt index (230 °C, 2.16 kg load) of 2 g/10 min to 5 g/10 min.

The hydrocarbon resin is a pale yellow or dark brown thermoplastic resin having a weight average molecular weight of 2,000 or less obtained by polymerization with an acid catalyst using a higher unsaturated hydrocarbons in a high-temperature pyrolysis oil such as naphtha as a raw material, and in the present invention, a hydrocarbon resin having a softening point of 120 °C to 140 °C, preferably 130 °C to 140 °C, may be used in terms of improving stiffness.

In the case of an aromatic hydrocarbon resin as the hydrocarbon resin, the main component may be a copolymer of styrenevinyltoluene, $\alpha$-methylstyrene, or indene, and in the case of an aliphatic hydrocarbon resin, the aliphatic hydrocarbon resin is a resin prepared by using, as a raw material, a C5 fraction among fractions produced in an olefin process during a naphtha cracking process, wherein the main component may be a copolymer of isoprene, piperiene-2-methylbutene-1, or the like. In addition, the aliphatic hydrocarbon resin may include a hydrocarbon resin prepared by using dicyclopentadiene as a raw material. In addition, in the case of a hydrogenated hydrocarbon resin, the hydrogenated hydrocarbon resin may be a resin formed by adding hydrogen to the aromatic hydrocarbon resin and the aliphatic hydrocarbon resin, and may include a hydrocarbon resin which is prepared by using dicyclopendadiene as a raw material and to which hydrogen is added.

In the present invention, the core layer may further include a polyolefin elastomer (POE) to improve dispersion and flowability through increasing the compatibility between a cyclic olefin resin component and a polypropylene component. In consideration of the above purpose, the polyolefin elastomer may have a density of 0.85 to 0.9 $g/cm^3$ and a melt index (230 °C, 2.16 kg load) of 0.5 g/10 min to 5 g/10 min, preferably a density of 0.86 $g/cm^3$ to 0.89 $g/cm^3$ and a melt index (230 °C, 2.16 kg load) of 1 g/10 min to 3 g/10 min.

The polyolefin elastomer may be a copolymer of propylene and an $\alpha$-olefin having 2 to 10 carbon atoms other than the propylene, and preferably, may be an ethylene-propylene rubber in which propylene and 5 wt% to 20 wt% of ethylene are copolymerized.

In the present invention, it is possible to implement desired transparency and stiffness of a film for a shrinkable label through a predetermined range of component content ratios in each layer of the above component combinations. To this end, the skin layer and the seal layer include 70 parts by weight to 90 parts by weight of a cyclic olefin resin and 10 parts by weight to 30 parts by weight of a linear low-density polyethylene, and the core layer includes 5 parts by weight to 25 parts by weight of a cyclic olefin resin, 60 parts by weight to 85 parts by weight of a propylene copolymer, and optionally, 1 part by weight to 20 parts by weight of a modifier. Preferably, the skin layer and the seal layer may include 75 parts by weight to 85 parts by weight of a cyclic olefin resin and 15 parts by weight to 25 parts by weight of a linear low-density polyethylene, and the core layer may include 10 parts by weight to 20 parts by weight of a cyclic olefin resin, 65 parts by weight to 80 parts by weight of a propylene copolymer, and 5 parts by weight to 15 parts by weight of a modifier.

When the content of the linear low-density polyethylene in the skin layer and the seal layer is less than 10 parts by weight, it is difficult to implement a film having a low specific gravity, and when greater than 30 parts by weight, the shrinkability and seaming properties of the film are degraded.

In addition, when the content of the propylene copolymer in the core layer is less than 60 parts by weight, transparency is degraded during stretching, and when greater than 85 parts by weight, the shrinkability of the film is degraded, and when a modifier is included and the content of the modifier is excessive, which is greater than 20 parts by weight, the shrinkage of the film may be degraded.

In addition, when the content of the cyclic olefin resin in each of the skin layer, the core layer, and the seal layer does not reach a predetermined level, the transparency of the film is degraded, and when the content thereof is excessive, the stiffness of the film is degraded.

In addition, the polyolefin elastomer (POE), which may be included in the core layer for reinforcing shrinkage properties and transparency, may be included in a content range of 5 parts by weight to 25 parts by weight, preferably 10 parts by weight to 20 parts by weight, and when the content thereof is excessive, the shrinkability of the film is degraded.

Meanwhile, in the present invention, when the content of the cyclic olefin resin is increased, flow non-uniformity may occur due to a difference in viscosity with polyolefin, and in order to solve the problem, the skin layer, the core layer, and the seal layer may each be formed of a melt-blended composition, and each composition may be combined to prepare a film. As a result, it is possible to improve dispersibility through melt-kneading before stretching the film due to the difference in the flowability of raw materials of each layer and to ensure a smooth stretching process after forming the film.

As long as the resin composition of each layer constituting the film for a shrinkable label according to the present invention does not impair the purpose of the present invention, one or more of various additives such as an antioxidant, a catalyst neutralizer, a pigment, a dispersant, an anti-weathering agent, an anti-static agent, a UV stabilizer, talc, and the like may be additionally contained. The usage amount of the additives may be adjusted in consideration of a total manufacturing amount, a manufacturing process, and the like within a range known to be used in manufacturing the film for a shrinkable label according to the present invention without affecting the properties of the film.

In the present invention, the manufacturing of a film by using the above components may be in accordance with a method commonly known in the art. For example, the components constituting each layer may be introduced into a mixer and mixed in respective required amounts, prepared in a pellet phase at 180 °C to 240 °C using an extruder, and melt-molded into a film through a multi-layer film molding machine to prepare a film for a shrinkable label.

At this time, using the multi-layer film molding machine, molding into the form of a sheet having a thickness of 175 um to 200 um is performed, wherein the thickness ratio of a skin layer, a core layer, and a seal layer is, for example, 1:2 to 6: 0.5 to 1.5, and then the sheet is stretched at a stretching ratio of 3.5 times to 5 times under the conditions of 80 °C to 85 °C in a stretching section, 95 °C to 100 °C in a pre-heating section, and 75 °C to 80 °C in a heat fixing section to manufacture a film having a final thickness of 50 $\mu$m.

The above-described film for a shrinkable label according to the present invention may significantly reduce troubles during a label attachment process by improving stiffness while further improving transparency, even by using a polyolefin material and not using a typical additive, and specifically, the film for a shrinkable label according to the present invention may have a transverse direction (TD) shrinkage rate of 40% or greater, preferably 46% or greater, and more preferably 50% or greater, a haze (ASTM D1003, 50 um thick) of less than 8%, preferably less than 5, and a stiffness of 4.5 gf/50 $\mu$m or greater, preferably 5.5 gf/50 $\mu$m or greater, as measured according to the following methods.

[Method for measuring shrinkage rate]

A film stretched in a transverse direction (TD) is cut to a size of 50 mm $\times$ 50 mm and immersed in a hot water bath at 60 °C, 70 °C, 80 °C, 90 °C, and 100 °C for 10 seconds each, followed by measuring the dimension of the film to calculate a shrinkage rate in each of a longitudinal direction (MD) and the transverse direction (TD) according to Equation 1 below, which is represented as an average shrinkage rate.

[Equation 1]

Shrinkage rate (%) = (Dimensions before shrinkage − Dimensions after shrinkage) / Dimensions before shrinkage x 100

[Method of measuring stiffness]

Using a loop stiffness tester (Toyoseiki Co., Ltd.), a stretched film is cut to a size of 25 mm × 150 mm and fixed to left and right clamps (film fixing device) by setting a gap between the left and right clamp to 50 mm, and then portions of the specimen protruding to the outside of both clamps are cut, and the film is bent such that there is no gap between the clamps so as to form a loop-shaped specimen, and an end portion of the specimen is pushed at a speed of 60 mm/min with a recorder (loading device) to measure a load (gf) applied at the time.

Hereinafter, the present invention will be described in more detail through specific Examples and Comparative Examples. Component specifications and physical property measurement methods used in Examples and Comparative Examples are as follows.

[Component specifications]

- Cyclic olefin resin: A cyclic olefin resin (9506F-500, TOPAS) having a glass transition temperature (Tg) of 65 °C to 70°C was used.
- Linear low-density polyethylene: A linear low-density polyethylene (UF315, Lotte Chemical) having a melting point (Tm) of 123 °C and a density of 0.92 g/cm3, and a linear low-density polyethylene (Smart 183, SK Chemicals) having a density of 0.918 g/cm$^3$ and a melt index of 3.1 g/10 min were used.
- Propylene copolymer: As a propylene ternary copolymer, a propylene copolymer (SFI-553, Lotte Chemicals) having a melting point (Tm) of 131 °C to 133 °C and a melt index of 7 g/10 min, a propylene copolymer (SB-740D, Lotte Chemicals) having a melting point (Tm) of 129 °C to 130 °C, a melt index of 5.5 g/10 min, and a calorific value of 75 J/g, a propylene copolymer (SFI-740T, Lotte Chemicals) having a melting point (Tm) of 129 °C to 130 °C, a melt index of 5.5 g/10 min, and a calorific value of 78 J/g, a propylene copolymer (SFI-841A, Lotte Chemicals) having a melting point (Tm) of 128 °C to 129 °C, a melt index of 5.5 g/10 min, and a calorific value of 65 J/g were used.
- Hydrocarbon resin: A hydrocarbon resin (SU-625, Kolon Industries) having a softening point of 125 °C and a hydrocarbon resin (SU-640, Kolon Industries) having a softening point of 136 °C were used.
- Propylene homopolymer: A propylene homopolymer (FO-135, Lotte Chemicals) having a melting point (Tm) of 158 °C and a melt index of 3 g/10 min was used.
- Polyolefin elastomer: An ethylene-propylene rubber (Vistamaxx 3020FL, ExxonMobil) having a density of 0.874 g/cm$^3$, a melt index of 2.2 g/10 min, and an ethylene content of 10.5 wt% was used.

[Method for measuring physical properties]

- Density: Measured in accordance with the ASTM D 1505 density gradient column method.
- Melt index: Measured in accordance with the ASTM D1238 standards, and under the condition of a 2.16 kg load at 190 °C for the linear low-density polyethylene, and under the conditions of a 2.16 kg load at 230 °C for the rest of the resins.
- Melting point (Tm): Using a differential scanning calorimeter (DSC, TA Instruments), 10 mg of a test piece was pre-melted at 220 °C for 5 minutes under a nitrogen gas atmosphere, and then the temperature was dropped to 40 °C at a temperature decrease rate of 10 °C/min. Thereafter, the temperature was raised at a temperature increase rate of 10 °C/min, and the peak temperature of the maximum peak of the obtained melting endothermic curve was defined as the melting point (Tm).
- Glass transition temperature (Tg): Using a differential scanning calorimeter (DSC, TA Instruments), 10 mg of a test piece was pre-melted at 220 °C for 5 minutes under a nitrogen gas atmosphere, and then the temperature was dropped to -80 °C at a temperature decrease rate of 10°C/min. Thereafter, while raising the temperature at a temperature increase rate of 10 °C/min, a median value of the height between the start point and the end point of the glass transition was calculated and defined as the glass transition temperature (Tg).

- Softening point: Measured in accordance with the ASTM D1525 standards. As a penetrating test, a load of 1 kg or 5 kg was applied to a specimen having a thickness of 3 mm, and while raising the temperature uniformly at a rate of 50 °C/hr, a temperature at which a standard needle with a surface area of 1 mm$^2$ penetrated the specimen by 1 mm was defined as the softening point.

Examples 1 to 6 and Comparative Examples 1 to 4

A dry blend and a melt blend (using a twin screw extruder) were prepared for each layer with compositions shown in Table 1 below, and then using a multi-layer film molding machine, the blends for each layer were molded into the form of a sheet having a thickness of 175 um to 200 um, wherein the thickness ratio of a skin layer, a core layer, and a seal layer was 1:4:1, and then the sheet was stretched at a stretching ratio of 3.8 times to 4.8 times under the conditions of 80 °C to 85 °C in a stretching section, 98 °C in a pre-heating section, and 78 °C in a heat fixing section to manufacture a film having a final thickness of 50 $\mu$m.

**Test Example**

Physical properties of the above manufactured film were measured by the following method, and the results are shown in Table 1 below.

[Method for measuring physical properties]

- Shrinkage rate : A film stretched in a transverse direction (TD) was cut to a size of 50 mm × 50 mm and immersed in a hot water bath at 60 °C, 70 °C, 80 °C, 90 °C, and 100 °C for 10 seconds each, followed by measuring the dimension of the film to calculate a shrinkage rate in each of a longitudinal direction (MD) and a transverse direction (TD) according to Equation 1 below, which was represented as an average shrinkage rate.

[Equation 1]

$$\text{Shrinkage rate (\%)} = (\text{Dimensions before shrinkage} - \text{Dimensions after shrinkage}) / \text{Dimensions before shrinkage} \times 100$$

- Seaming: A solvent (toluene, chloroform, limonene, or alphapinene) was applied to a cotton swab to confirm the presence or absence of adhesion between an outer surface and a rear surface of the stretched film (see FIG. 1).
- Haze: Measured in accordance with the ASTM D1003 standards.
- Loop-stiffness: Using a loop stiffness tester (Toyoseiki Co., Ltd.), a stretched film was cut to a size of 25 mm × 150 mm and fixed to left and right clamps (film fixing device) by setting a gap between the left and right clamp to 50 mm, and then portions of the specimen protruding to the outside of both clamps were cut, and the film was bent such that there was no gap between the clamps so as to form a loop-shaped specimen, and an end portion of the specimen was pushed at a speed of 60 mm/min with a recorder (loading device) to measure a load (gf) applied at the time.

[Table 1]

| Classification | | | Example 1 | Example 2 | Example 3 | Example 4 | Example 5 | Example 6 | Example 7 | Example 8 | Comparative Example 1 | Comparative Example 2 |
|---|---|---|---|---|---|---|---|---|---|---|---|---|
| Composition (parts by weight) | Skin layer/ Seal layer | CCC(9506F) | 80 | 80 | 80 | 80 | 80 | 80 | 80 | 80 | - | - |
| | | UF315 | 20 | - | - | - | - | - | - | - | 100 | - |
| | | SMART 183 | - | 20 | 20 | 20 | 20 | 20 | 20 | 20 | - | 100 |
| | Core layer | CCC(9506F) | 20 | 15 | 15 | 15 | 15 | 15 | 15 | 15 | 15 | 20 |
| | | S8-740D | 80 | 85 | 75 | 75 | 75 | - | - | - | 85 | 80 |
| | | SFI-740T | - | - | - | - | - | - | 65 | - | - | - |
| | | SFI-841A | - | - | - | - | - | - | - | 65 | - | - |
| | | SFI-553 | v | - | - | - | - | 65 | - | - | - | - |
| | | SU-625 | - | - | 10 | - | - | 10 | 10 | 10 | - | - |
| | | SU-640 | - | - | - | 10 | - | - | - | - | - | - |
| | | FO-135 | - | - | - | - | 10 | - | - | - | - | - |
| | | Vistama XX 3020FL | - | - | - | - | - | 15 | 15 | 15 | - | - |

(continued)

| Classification | | | Example 1 | Example 2 | Example 3 | Example 4 | Example 5 | Example 6 | Example 7 | Example 8 | Comparative Example 1 | Comparative Example 2 |
|---|---|---|---|---|---|---|---|---|---|---|---|---|
| Physical properties | TD Shrinkage rate (%) | Dry blend | 42 | 40 | 46 | 44 | 45 | 49 | 50 | 52 | 30 | 30 |
| | | Melt blend | 45 | 43 | 50 | 47 | 46 | 53 | 54 | 55 | 30 | 30 |
| | Seaming | Dry blend | O | O | O | O | O | O | O | O | X | X |
| | | Melt blend | O | O | O | O | O | O | O | O | X | X |
| | Haze (%) | Dry blend | 10.6 | 8 | 7 | 7.1 | 9 | 5.2 | 5.5 | 5 | 16 | 17 |
| | | Melt blend | 8 | 7 | 6 | 6.4 | 7.6 | 4.2 | 4.1 | 4 | 15 | 16 |
| | Loop-stiffness (gf/50 μm) | Dry blend | 4.5 | 4.6 | 5 | 5.1 | 5.6 | 5.1 | 4.5 | 4.2 | 4 | 4 |
| | | Melt blend | 5 | 5.1 | 5.5 | 5.6 | 6.1 | 5.5 | 4.9 | 4.5 | 4.4 | 4.3 |

Referring to Table 1, in the case of the film for a shrinkable label including a skin layer, a core layer, and a seal layer in a specific composition according to the present invention, it can be seen that excellent physical properties have been implemented in all of shrinkage properties, seaming properties, transparency, and stiffness. Particularly, when comparing the case in which a propylene homopolymer was used as a modifier in the core layer (Example 5) with the case in which a hydrocarbon resin was used as a modifier in the core layer (Examples 3 and 4), it is advantageous to use the propylene homopolymer in terms of improving stiffness, but when considering the balance of physical properties with transparency, it can be seen that it is more preferable to use the hydrocarbon resin. In addition, when the core layer is further reinforced with a polyolefin elastomer component (Examples 6 to 8), there was a slight sacrifice in terms of stiffness, but when considering shrinkage properties and transparency as well, it can be seen that the balance of overall film physical properties was further improved. However, referring to Examples 1 and 2, it has been confirmed that it is more preferable to use a cyclic olefin resin in the skin layer and the seal layer and use a modifier in the core layer in terms of shrinkage properties and transparency of the film.

In this regard, it can be seen that when a cyclic olefin resin is not used in the skin layer and the seal layer and a modifier is not used in the core layer (Comparative Examples 1 and 2), all the physical properties are significantly degraded.

Meanwhile, compared to the case of using a dry-mixed resin composition as the resin composition of each layer used in film production, in the case of using a melt-kneaded resin composition, the flow non-uniformity phenomenon due to the difference in viscosity between the resin components was relived, resulting in improving all of shrinkage properties, transparency, and stiffness.

The preferred embodiments of the present invention have been described in detail. The description of the present invention has been presented for purposes of illustration, and it will be understood by those skilled in the art that various changes in form and details may be made therein without departing from the spirit and scope of the invention.

Therefore, the scope of the present invention is represented by the following claims rather than the above detailed description, and all changes and changed forms derived from the meaning, scope, and equivalent concepts of the claims should be construed as being included in the scope of the present invention.

**Claims**

1.    A film for a shrinkable label, the film comprising a skin layer, a core layer and a seal layer, wherein:

the skin layer and the seal layer include 70 parts by weight to 90 parts by weight of a cyclic olefin resin and 10 parts by weight to 30 parts by weight of a linear low-density polyethylene, and
the core layer includes 5 parts by weight to 25 parts by weight of a cyclic olefin resin and 60 parts by weight to 85 parts by weight of a propylene copolymer.

2.    The film for a shrinkable label of claim 1, wherein:

the cyclic olefin resin has a glass transition temperature (Tg) of 60 °C to 75 °C; and
the propylene copolymer is a terpolymer of propylene and two types of $\alpha$-olefins.

3.    The film for a shrinkable label of claim 1, wherein:

the linear low-density polyethylene has a density of 0.9 $g/cm^3$ to 0.95 $g/cm^3$ and a melting point (Tm) of 118 °C to 128 °C; and
the propylene copolymer has a melting point (Tm) of 123 °C to 138 °C and a melt index (230 °C, 2.16 kg load) of 2 g/10 min to 10 g/10 min.

4.    The film for a shrinkable label of claim 1, wherein the core layer further comprises a polyolefin elastomer having a density of 0.85 $g/cm^3$ to 0.9 $g/cm^3$ and a melt index (230 °C, 2.16 kg load) of 0.5 g/10 min to 5 g/10 min.

5.    The film for a shrinkable label of claim 1, wherein the core layer further comprises, as a modifier, 1 part by weight to 20 parts by weight of a hydrocarbon resin having a softening point of 120 °C to 140 °C or a propylene homopolymer having a melting point (Tm) of 155 °C to 165 °C and a melt index (230 °C, 2.16 kg load) of 1 g/10 min to 10 g/10 min.

6.    The film for a shrinkable label of claim 1, wherein the film has a shrinkage rate of 40% or greater, a haze (ASTM D1003, 50 um thick) of less than 8%, and a stiffness of 4.5 gf/50 $\mu$m, as measured according to the following methods:

[Method for measuring shrinkage rate]
a film stretched in a transverse direction (TD) is cut to a size of 50 mm × 50 mm and immersed in a hot water bath at 60 °C, 70 °C, 80 °C, 90 °C, and 100 °C for 10 seconds each, followed by measuring the dimension of the film to calculate a shrinkage rate in each of a longitudinal direction (MD) and the transverse direction (TD) according to Equation 1 below, which is represented as an average shrinkage rate, and

[Equation 1]

Shrinkage rate (%) = (Dimensions before shrinkage − Dimensions after shrinkage) / Dimensions before shrinkage x 100

[Method of measuring stiffness]
using a loop stiffness tester (Toyoseiki Co., Ltd.), a stretched film is cut to a size of 25 mm × 150 mm and fixed to left and right clamps (film fixing device) by setting a gap between the left and right clamp to 50 mm, and then portions of the specimen protruding to the outside of both clamps are cut, and the film is bent such that there is no gap between the clamps so as to form a loop-shaped specimen, and an end portion of the specimen is pushed at a speed of 60 mm/min with a recorder (loading device) to measure a load (gf) applied at the time.

7. A method for manufacturing a film by melt-blending, followed by combining, each of the skin layer, the core layer, and the seal layer of claim 1.

ADHESIVE
PORTION
(REAR
SURFACE)

ADHESIVE
PORTION
(OUTER
SURFACE)

Fig. 1

## INTERNATIONAL SEARCH REPORT

| International application No. |
| --- |
| **PCT/KR2021/016291** |

| | |
| --- | --- |
| **A. CLASSIFICATION OF SUBJECT MATTER** | |
| **B32B 27/08**(2006.01)i; **B32B 27/32**(2006.01)i | |
| According to International Patent Classification (IPC) or to both national classification and IPC | |

| **B. FIELDS SEARCHED** |
| --- |
| Minimum documentation searched (classification system followed by classification symbols) |
| B32B 27/08(2006.01); B29C 47/00(2006.01); B32B 27/00(2006.01); B32B 27/06(2006.01); B32B 27/18(2006.01); B32B 27/32(2006.01) |
| Documentation searched other than minimum documentation to the extent that such documents are included in the fields searched |
| Korean utility models and applications for utility models: IPC as above<br>Japanese utility models and applications for utility models: IPC as above |
| Electronic data base consulted during the international search (name of data base and, where practicable, search terms used) |
| eKOMPASS (KIPO internal) & keywords: 라벨(label), 필름(film), 환형올레핀(cyclic-olefin), 폴리에틸렌(polyethylene), 프로필렌 공중합체(propylene-copolymer) |

**C. DOCUMENTS CONSIDERED TO BE RELEVANT**

| Category* | Citation of document, with indication, where appropriate, of the relevant passages | Relevant to claim No. |
| --- | --- | --- |
| X | KR 10-2002-0048970 A (C.I. KASEI KABUSHIKI KAISHA) 24 June 2002 (2002-06-24)<br>See claims 1-10; paragraphs [0010]-[0015] and [0022]-[0025]; examples 1-2; and tables 1-2. | 1-3,5-7 |
| Y | | 4 |
| Y | KR 10-2017-0127664 A (SKC CO., LTD.) 22 November 2017 (2017-11-22)<br>See claim 1. | 4 |
| A | US 2006-0057410 A1 (SAAVEDRA, J. V. et al.) 16 March 2006 (2006-03-16)<br>See abstract; claims 1-2, 7, 16 and 28-29; and paragraphs [0024] and [0033]. | 1-7 |
| A | JP 2005-103882 A (MITSUBISHI PLASTICS IND. LTD.) 21 April 2005 (2005-04-21)<br>See entire document. | 1-7 |
| A | KR 10-1606915 B1 (WEDUSCHEMICAL CO., LTD.) 25 March 2016 (2016-03-25)<br>See entire document. | 1-7 |

| ☐ Further documents are listed in the continuation of Box C. | ☑ See patent family annex. |
| --- | --- |

| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |
| --- | --- |
| Date of the actual completion of the international search<br><br>**23 February 2022** | Date of mailing of the international search report<br><br>**23 February 2022** |
| Name and mailing address of the ISA/KR<br><br>**Korean Intellectual Property Office**<br>**Government Complex-Daejeon Building 4, 189 Cheongsa-**<br>**ro, Seo-gu, Daejeon 35208** | Authorized officer |
| Facsimile No. **+82-42-481-8578** | Telephone No. |

Form PCT/ISA/210 (second sheet) (July 2019)

**INTERNATIONAL SEARCH REPORT**
**Information on patent family members**

International application No.

**PCT/KR2021/016291**

| Patent document cited in search report | | | Publication date (day/month/year) | Patent family member(s) | | | Publication date (day/month/year) |
|---|---|---|---|---|---|---|---|
| KR | 10-2002-0048970 | A | 24 June 2002 | CA | 2389035 | A1 | 07 September 2001 |
| | | | | EP | 1270203 | A1 | 02 January 2003 |
| | | | | JP | 2001-315260 | A | 13 November 2001 |
| | | | | US | 2002-0192412 | A1 | 19 December 2002 |
| | | | | WO | 01-64435 | A1 | 07 September 2001 |
| KR | 10-2017-0127664 | A | 22 November 2017 | KR | 10-1924552 | B1 | 03 December 2018 |
| US | 2006-0057410 | A1 | 16 March 2006 | AU | 2003-268092 | A1 | 30 April 2004 |
| | | | | CN | 1681650 | A | 12 October 2005 |
| | | | | CN | 1681650 | B | 29 December 2010 |
| | | | | EP | 1539489 | A2 | 15 June 2005 |
| | | | | EP | 1539489 | B1 | 04 June 2014 |
| | | | | JP | 2005-538867 | A | 22 December 2005 |
| | | | | JP | 4495590 | B2 | 07 July 2010 |
| | | | | KR | 10-1092056 | B1 | 12 December 2011 |
| | | | | KR | 10-2005-0049494 | A | 25 May 2005 |
| | | | | US | 8092920 | B2 | 10 January 2012 |
| | | | | WO | 2004-024433 | A2 | 25 March 2004 |
| | | | | WO | 2004-024433 | A3 | 16 September 2004 |
| JP | 2005-103882 | A | 21 April 2005 | JP | 4348156 | B2 | 21 October 2009 |
| KR | 10-1606915 | B1 | 25 March 2016 | None | | | |

Form PCT/ISA/210 (patent family annex) (July 2019)

**EP 4 253 046 A1**

**REFERENCES CITED IN THE DESCRIPTION**

**Patent documents cited in the description**

- KR 1020200163687
- KR 101606915